# EUROPEAN PATENT APPLICATION

(11) **EP 4 836 043 A1**
(43) Date of publication of application: **04.11.2026**
(21) Application number: 24914533.5
(22) Date of filing: 02.01.2024
(51) Int. Cl.: H01M 10/04, H01M 10/0587, H01M 50/489, H01M 10/613

(54) **BATTERY AND ELECTRIC DEVICE**

(71) Applicant: Contemporary Amperex Technology Co., Limited, Ningde, Fujian 352100 (CN)
(72) Inventor: LIN, Chenhui, Ningde, Fujian 352100 (CN); LANG, Yaqiang, Ningde, Fujian 352100 (CN); HE, Jianfu, Ningde, Fujian 352100 (CN); YE, Yonghuang, Ningde, Fujian 352100 (CN)
(74) Representative: Gong, Jinping
(86) International application number: PCT/CN2024/070185
(87) International publication number: WO 2025/145296

(57) **Abstract**

The present application discloses a battery and an electric apparatus. The battery includes a battery cell and at least one cooling member. The battery cell includes a housing, at least one electrode assembly, and at least one buffer member. The electrode assembly and the buffer member are disposed in the housing; the buffer member is provided on at least part of a surface of the electrode assembly and/or inside the electrode assembly; and the at least one electrode assembly and the at least one buffer member are stacked along a first direction. The cooling member is provided on at least one side of the battery cell along the first direction.

## Description

### TECHNICAL FIELD

This application pertains to the technical field of batteries, and specifically relates to a battery and an electric apparatus.

### BACKGROUND

Batteries, as energy storage apparatuses, are widely applied in various fields. Taking lithium-ion batteries as an example, they possess characteristics such as environmental friendliness, environmental protection, high energy, and low carbon, and are not only applied in energy storage power supply systems such as hydroelectric, thermal, wind, and solar power stations, but also widely applied in electric bicycles, electric motorcycles, electric vehicles, ships, and other electric transportation vehicles, as well as in various fields such as military equipment and aerospace. With the current development of society, increasingly high requirements are imposed on batteries.

### SUMMARY

In view of the technical problems existing in the background, this application provides a battery aimed at shortening the heat conduction path and improving the cooling efficiency of the battery.

To achieve the above objective, a first aspect of this application provides a battery, including:
a battery cell, including: a housing, at least one electrode assembly, and at least one buffer member, where the electrode assembly and the buffer member are disposed in the housing, the buffer member is provided on at least part of a surface of the electrode assembly and/or inside the electrode assembly, and at least one electrode assembly and at least one buffer member are stacked along a first direction; and
at least one cooling member provided on at least one side of the battery cell along the first direction.

The battery according to the first aspect of this application has the following beneficial effects: on one hand, the provision of the buffer member can increase the fitting degree between the electrode assembly and the housing, and also facilitates direct fitting of the electrode assembly with an inner wall of the housing or fitting with the inner wall of the housing through the buffer member or an insulating film even when the buffer member is not excessively compressed. This not only helps to shorten the heat conduction path between the electrode assembly and the housing, but also helps to increase a contact heat exchange area between the electrode assembly and the housing, improving the self-heat dissipation effect of the battery cell, thereby improving the cooling efficiency; further, the structure in which at least one electrode assembly and at least one buffer member are stacked along the first direction enables a further increased fitting degree between the electrode assembly and the inner wall of the housing in the first direction and a further shortened heat conduction path; and on this basis, the provision of the cooling member on at least one side of the battery cell along the first direction not only helps to further shorten the heat conduction path between the electrode assembly and the cooling member in the first direction, but also helps to increase a relative heat exchange area between the electrode assembly and the cooling member in a portion where the heat conduction path is shortened in the first direction, thereby helping to further improve the cooling efficiency. In conclusion, the use of the above structure helps to increase the fitting degree between the electrode assembly and the housing, shorten the heat conduction path, improve the self-heat dissipation of the battery cell and the heat conduction efficiency with the cooling member, and improve the heat dissipation effect of the battery.

In some embodiments of this application, the battery includes: at least one first battery cell group, where the first battery cell group includes a plurality of battery cells stacked along the first direction.

In some embodiments of this application, a plurality of first battery cell groups are stacked along a second direction, where the second direction intersects the first direction.

In some embodiments of this application, the battery includes a first battery cell group, and in the first direction, the cooling member is provided between two adjacent battery cells, and/or the cooling member is provided on one side of the plurality of battery cells along the first direction. This facilitates improvement of the heat dissipation efficiency and effect of the battery.

In some embodiments of this application, the battery includes: at least one second battery cell group, where the second battery cell group includes a plurality of battery cells stacked along a second direction, and the second direction intersects the first direction.

In some embodiments of this application, the battery includes a second battery cell group, and in the first direction, the cooling member is provided between two adjacent battery cells, and/or the cooling member is provided on one side of the plurality of battery cells along the first direction.

In some embodiments of this application, the battery cell includes two first surfaces oppositely disposed along the first direction, and an area of the first surface is greater than or equal to an area of any single surface among other surfaces of the battery cell. Satisfying the given condition facilitates a further increase in a total heat exchange area between the battery cell and the cooling member, improving the heat dissipation efficiency and effect of the battery.

In some embodiments of this application, an area of an orthographic projection of the buffer member stacked with the electrode assembly along the first direction on the first surface is greater than or equal to 80% of the area of the first surface. This facilitates a further increase in the fitting degree between the electrode assembly and the housing while increasing the total heat exchange area between the battery cell and the cooling member, thereby facilitating further improvement of the heat dissipation efficiency of the battery cell.

In some embodiments of this application, in the first direction, the cooling member is provided between every two of the plurality of battery cells. Satisfying the given condition facilitates a further increase in a total heat exchange area between all battery cells and the cooling member in the entire battery, improving the heat dissipation efficiency and effect of the battery.

In some embodiments of this application, a first group margin of the battery cell is greater than or equal to 95%, optionally greater than or equal to 100%; and a second group margin of the battery cell is greater than or equal to 90%, optionally greater than or equal to 95%. The first group margin refers to: in the first direction, a ratio of a sum of a total thickness of the buffer member in the battery cell in a free state and a maximum total dimension of the electrode assembly in a fully charged state to a distance between inner wall surfaces of the housing; and the second group margin refers to: in the first direction, a ratio of the maximum total dimension of the electrode assembly in the battery cell in a fully charged state to the distance between inner wall surfaces of the housing. Satisfying the given condition not only increases the fitting degree between the electrode assembly and the housing and improves the heat exchange efficiency and effect, but also guarantees the energy density of the battery.

In some embodiments of this application, the first group margin of the battery cell is less than or equal to 108%, optionally less than or equal to 105; and/or the second group margin is less than or equal to 100%, optionally less than or equal to 98%%. Satisfying the given condition also helps to guarantee the volume stability of the battery during charge-discharge cycles.

In some embodiments of this application, a cooling medium flow channel is provided inside the cooling member, the cooling medium flow channel includes an inlet and an outlet, and the first group margin of the battery cell located on a side of the outlet is greater than or equal to the first group margin of the battery cell located on a side of the inlet. Satisfying the given condition helps to compensate for reduced cooling effect on the battery cell close to a side of the outlet of the cooling medium flow channel caused by a temperature rise of the cooling medium, thereby helping to maintain the uniformity of the overall temperature of each battery cell in the battery.

In some embodiments of this application, a difference between the first group margin of the battery cell located on a side of the outlet and the first group margin of the battery cell located on a side of the inlet is less than or equal to 5%. Satisfying the given condition not only helps to maintain the uniformity of the overall temperature of each battery cell in the battery but also can guarantee the overall volume stability of the battery.

In some embodiments of this application, a difference between the second group margin of the battery cell located on a side of the outlet and the second group margin of the battery cell located on a side of the inlet is less than or equal to 1%, optionally 0.

In some embodiments of this application, the first group margins of the plurality of battery cells distributed along a direction from the inlet toward the outlet gradually increase, and a difference between the first group margin and the second group margin of the battery cell located on a side of the outlet is greater than a difference between the first group margin and the second group margin of the battery cell located on a side of the inlet. Satisfying the given condition helps to further improve the overall heat dissipation effect of the battery and maintain the uniformity of the overall temperature of each battery cell in the battery.

In some embodiments of this application, a plurality of cooling members are provided, where cooling medium flow channels of the plurality of cooling members are arranged in parallel and/or in series.

In some embodiments of this application, the plurality of cooling members are connected through a connecting member, and the cooling medium flow channels of two adjacent cooling members spaced apart in the first direction may be arranged in a communicating manner through the connecting member. Satisfying the given condition not only helps to realize filling and flowing of the cooling medium in different cooling medium flow channels but also helps to further increase the contact area between the battery cell and the cooling medium, thereby improving the heat dissipation effect.

In some embodiments of this application, the battery cell includes two second surfaces oppositely disposed along the first direction, and at least one of the two second surfaces is in contact with the cooling member. Satisfying the given condition can further shorten the heat conduction path, thereby improving the heat dissipation efficiency and effect.

In some embodiments of this application, in the battery cell, a contact area between the second surface and the cooling member is greater than or equal to 80% of an area of the second surface, optionally 80% to 100% of the area of the second surface, and further optionally 90% to 100% of the area of the second surface. Satisfying the given condition facilitates further improvement of the heat dissipation efficiency and effect.

In some embodiments of this application, a total contact area between a single battery cell and the cooling member is greater than or equal to 20% of a total surface area of the battery cell, optionally greater than or equal to 25% of the total surface area of the battery cell. Satisfying the given condition facilitates further improvement of the heat dissipation efficiency and effect.

In some embodiments of this application, in the battery cell, the buffer member is provided between part of the surface of the electrode assembly and the housing. Satisfying the given condition helps to increase both the fitting degree and abutting area between the electrode assembly and the housing, thereby improving the heat dissipation efficiency and effect of the battery.

In some embodiments of this application, a thermal conductivity of the buffer member provided between the electrode assembly and the housing is greater than or equal to 3 W/(m·°C), optionally greater than or equal to 5 W/(m·°C). Satisfying the given condition can improve the heat conduction efficiency of the buffer member, thereby improving the heat dissipation effect of the battery cell.

In some embodiments of this application, in the battery cell, the buffer member is provided between two adjacent electrode assemblies. Satisfying the given condition facilitates an increase in the fitting degree between the electrode assembly and the housing, thereby improving the heat dissipation efficiency and effect of the battery.

In some embodiments of this application, the thermal conductivity of the buffer member provided between two adjacent electrode assemblies is less than or equal to 0.05 W/(m·°C), optionally less than or equal to 0.03 W/(m·°C). Satisfying the given condition facilitates isolation of heat conduction between battery assemblies, thereby reducing the risk of failure of one electrode assembly triggering failure of other electrode assemblies.

In some embodiments of this application, the electrode assembly includes a separator and a thermal conductivity of the separator is greater than or equal to the thermal conductivity of the buffer member. Satisfying the given condition facilitates improvement of the heat dissipation efficiency and effect of the battery.

In some embodiments of this application, the battery cell further includes: an insulating film, where the insulating film wraps at least part of the surface of the electrode assembly. In the first direction, each electrode assembly is stacked with at least one insulating film layer, and a thermal conductivity of the insulating film is greater than or equal to the thermal conductivity of the buffer member. Satisfying the given condition not only helps to reduce the risk of electric leakage but also helps to improve the heat dissipation efficiency and effect of the battery.

In some embodiments of this application, a third group margin of the battery cell is greater than or equal to 95%, optionally greater than or equal to 100%, where the third group margin refers to: in the first direction, a ratio of a sum of a total thickness of the buffer member in the battery cell in a free state, a maximum total dimension of the electrode assembly in a fully charged state, and a total thickness of the insulating film to a distance between inner wall surfaces of the housing. Satisfying the given condition facilitates further improvement of the heat dissipation efficiency and effect of the battery.

In some embodiments of this application, the battery cell includes at least two electrode assemblies, and each buffer member in the battery cell is independently provided between two adjacent electrode assemblies and stacked with the electrode assemblies along the first direction. Satisfying the given condition facilitates improvement of the heat dissipation efficiency and effect of the battery.

In some embodiments of this application, the battery cell includes two third surfaces oppositely disposed along the first direction, and an orthographic projection of the buffer member stacked with and disposed adjacent to the electrode assembly along the first direction on the third surface is located within a region of an orthographic projection of the electrode assembly on the third surface. Satisfying the given condition not only helps to improve the heat dissipation efficiency and effect of the battery, but also helps to guarantee the energy density of the battery cell.

In some embodiments of this application, an area of the orthographic projection of the buffer member stacked with and disposed adjacent to the electrode assembly along the first direction on the third surface is greater than or equal to 80% of an area of the orthographic projection of the electrode assembly on the third surface. Satisfying the given condition facilitates improvement of the heat dissipation efficiency of the battery cell and volume stability during cycling.

A second aspect of this application provides an electric apparatus, including: the battery according to the first aspect of this application.

### BRIEF DESCRIPTION OF DRAWINGS

The above and/or additional aspects and advantages of this application become apparent and readily understood from the description of embodiments in conjunction with the following drawings, in which:
FIG. 1 is a schematic structural cross-sectional view of a battery according to an embodiment of this application.
FIG. 2 is a schematic structural cross-sectional view of a prismatic battery cell according to an embodiment of this application.
FIG. 3 is a schematic structural cross-sectional view of a prismatic battery cell according to another embodiment of this application.
FIG. 4 is a schematic structural cross-sectional view of a prismatic battery cell according to still another embodiment of this application.
FIG. 5 is a schematic structural cross-sectional view of a prismatic battery cell according to yet another embodiment of this application.
FIG. 6 is a schematic structural cross-sectional view of a cylindrical battery cell according to an embodiment of this application.
FIG. 7 is a schematic structural diagram of a prismatic battery cell according to an embodiment of this application.
FIG. 8 is a schematic structural cross-sectional view of a battery according to another embodiment of this application.
FIG. 9 is a schematic structural cross-sectional view of a battery according to still another embodiment of this application.
FIG. 10 is a schematic structural cross-sectional view of a battery according to yet another embodiment of this application.
FIG. 11 is a schematic structural cross-sectional view of a battery according to a further embodiment of this application.
FIG. 12 is a schematic structural cross-sectional view of a battery according to a still further embodiment of this application.
FIG. 13 is a schematic structural diagram of a battery module according to an embodiment of this application.
FIG. 14 is a schematic structural diagram of a battery pack according to an embodiment of this application.
FIG. 15 is an exploded view of a battery pack according to an embodiment of this application.
FIG. 16 is a schematic diagram of an electric apparatus using a battery as a power source according to an embodiment of this application.

### Reference numerals:

11. housing; 12. electrode assembly; 13. buffer member; 13a. first buffer member; 13b. second buffer member; 1. battery cell; 2. battery module; 3. battery pack; 4. upper box body; 5. lower box body; 6. cooling member; 61. inlet of cooling medium flow channel; 62. outlet of cooling medium flow channel; A. first battery cell group; and B. second battery cell group.

### DESCRIPTION OF EMBODIMENTS

This application is further described with reference to specific embodiments. It should be understood that these specific embodiments are only used to illustrate this application and are not intended to limit the scope of this application.

The following specifically discloses embodiments of a positive electrode active material and a preparation method thereof, a positive electrode sheet, a battery, and an electric apparatus with appropriate reference to detailed description of the drawings. However, unnecessary detailed descriptions may be omitted. For example, detailed descriptions of well-known matters and repeated descriptions of substantially identical structures are omitted. This is to avoid unnecessarily prolonging the following description and to facilitate understanding by those skilled in the art. In addition, the drawings and the following description are provided for those skilled in the art to fully understand this application and are not intended to limit the subject matter recited in the claims.

The "ranges" disclosed in this application are defined in the form of lower limits and/or upper limits, and a given range is defined by selecting one lower limit and/or one upper limit, and the selected lower limit and/or upper limit defines the boundaries of the particular range. Ranges defined in this manner may or may not include endpoints and the endpoints may be arbitrarily combined, that is, any lower limit may be combined with any upper limit to form a range not explicitly recited, and any lower limit may be combined with other lower limits to form a range not explicitly recited. Similarly, any upper limit may be combined with any other upper limit to form a range not explicitly recited. In addition, each individually disclosed point or single numerical value may serve as a lower limit or upper limit to combine with any other point or single numerical value or with other lower limits or upper limits to form a range not explicitly recited. For example, if ranges of 60 to 120 and 80 to 110 are listed for a particular parameter, it is understood that ranges of 60 to 110 and 80 to 120 are also contemplated. In addition, if the listed minimum range values are 1 and 2, and if the listed maximum range values are 3, 4, and 5, the following ranges are all contemplated: 1 to 3, 1 to 4, 1 to 5, 2 to 3, 2 to 4, and 2 to 5. In this application, unless otherwise stated, the numerical range "a to b" represents an abbreviated representation of any real number combination between a and b, where a and b are both real numbers. For example, the numerical range "0 to 5" indicates that all real numbers between "0 to 5" have been listed herein, and "0 to 5" is merely an abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of this application may be combined with each other to form new technical solutions, and such technical solutions should be considered as being included in the disclosure of this application.

Unless otherwise specified, all technical features and optional technical features of this application may be combined with each other to form new technical solutions, and such technical solutions should be considered as being included in the disclosure of this application.

Unless otherwise specified, all steps of this application may be performed sequentially or randomly, preferably sequentially. For example, a method including steps S1 and S2 indicates that the method may include steps S1 and S2 performed sequentially, or may include steps S2 and S1 performed sequentially. For example, mentioning that the method may further include step S3 indicates that step S3 may be added to the method in any order, for example, the method may include steps S1, S2, and S3, may include steps S1 and S3 and S2, or may include steps S3, S1, and S2, and the like.

Unless otherwise specified, the terms "include" and "comprise" mentioned in this application indicate open-ended or closed-ended. For example, the terms "include" and "comprise" may indicate that other components not listed may also be included or comprised, or only the listed components may be included or comprised.

Unless otherwise specified, in this application, the term "or" is inclusive. For example, the phrase "A or B" means "A, B, or both A and B". More specifically, any of the following conditions satisfy the condition "A or B": A is true (or present) and B is false (or absent); A is false (or absent) and B is true (or present); or both A and B are true (or present).

Unless otherwise specified, in this application, the term "and/or" is merely an association relationship describing associated objects, indicating that three relationships may exist. For example, A and/or B may indicate the following three cases: only A is present, both A and B are present, and only B is present. In addition, the character "/" herein generally indicates that the contextually associated objects are in an "or" relationship.

In this application, the term "a plurality of" or "various" refers to two or more.

Unless otherwise defined, all technical and scientific terms used in this application have the same meaning as commonly understood by those skilled in the technical field to which this application belongs. The terms used in this application are only for the purpose of describing specific embodiments and are not intended to limit this application. The terms "include", "have", as well as any variations thereof in the specification and claims of this application and the above description of drawings are intended to cover non-exclusive inclusion. Unless otherwise stated, the terms used in this application have the well-known meanings commonly understood by those skilled in the art. Unless otherwise stated, the numerical values of parameters mentioned in this application can be measured by various measurement methods commonly used in the art (for example, can be tested according to the methods given in the embodiments of this application).

With the continuous advancement of the environmental friendliness and environmental protection themes, the application of batteries has penetrated into all aspects of life, including vehicles, electronic devices, energy storage apparatuses, and the like. However, with the continuous promotion of battery applications, increasingly high requirements are imposed on batteries. Batteries are accompanied by heat generation during charge-discharge cycles, but a long time of excessive heat generation on one hand easily leads to rapid capacity decay of the battery, and on the other hand increases the risk of battery swelling and thermal runaway, affecting the service life of the battery and the normal operation of the electric apparatus.

In this application, the provision of a buffer member in the battery cell and stacking at least one electrode assembly and at least one buffer member located in the housing of the battery cell along a first direction and the provision of a cooling member on at least one side of the battery cell along the first direction helps to increase the fitting degree between the electrode assembly and the housing, improve the heat conduction efficiency between the battery cell and the cooling member, and improve the heat dissipation effect of the battery.

The battery disclosed in the embodiments of this application can be used in electric apparatuses using batteries as power sources or in various energy storage systems using batteries as energy storage elements. The electric apparatus may include but is not limited to mobile phones, tablets, laptops, electric toys, electric tools, battery vehicles, electric vehicles, ships, and spacecraft. Electric toys may include fixed or mobile electric toys, such as game consoles, electric toy cars, electric toy ships, and electric toy airplanes, and spacecraft may include airplanes, rockets, space shuttles, spaceships, and the like.

A first aspect of this application provides a battery, including: a battery cell and at least one cooling member, where the battery cell includes a housing, at least one electrode assembly, and at least one buffer member. The electrode assembly and the buffer member are disposed in the housing, the buffer member is provided on at least part of a surface of the electrode assembly and/or inside the electrode assembly, and at least one electrode assembly and at least one buffer member are stacked along a first direction. The cooling member is provided on at least one side of the battery cell along the first direction.

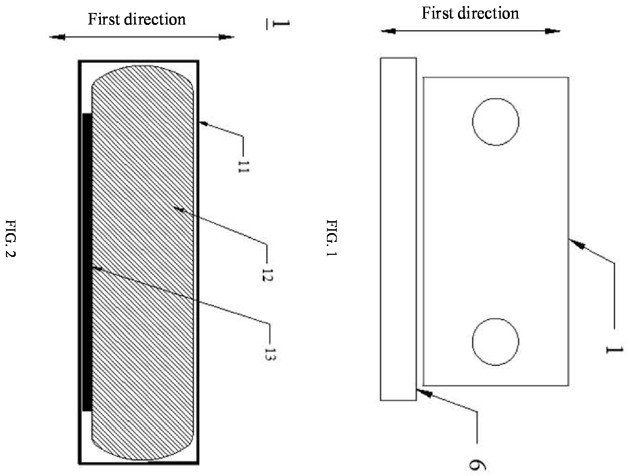

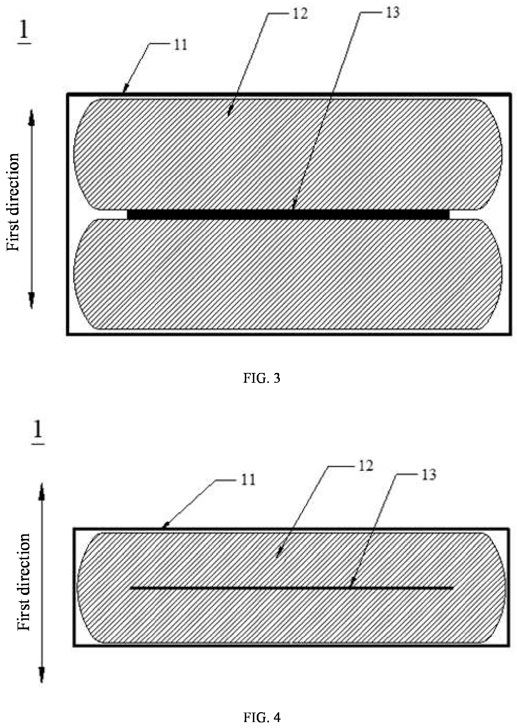

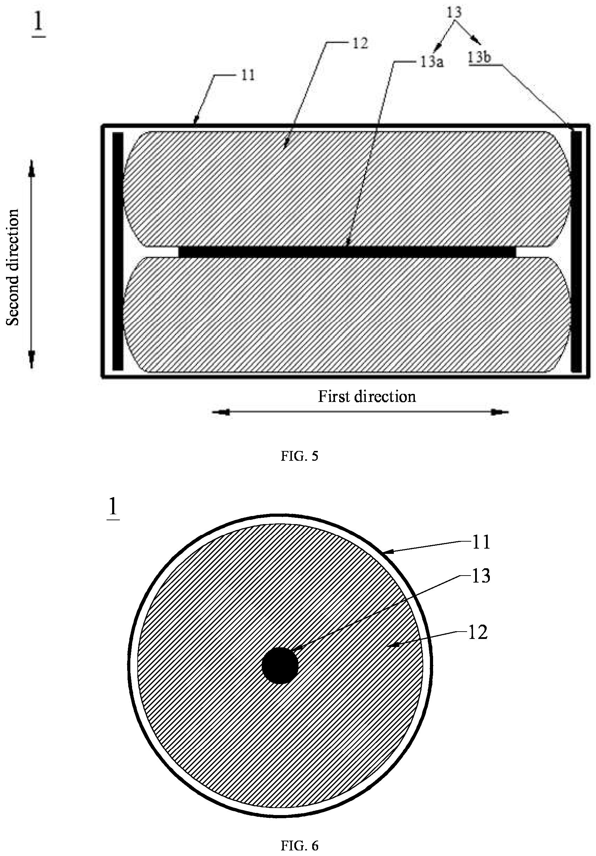

For example, with reference to FIG. 1 to FIG. 6, the battery according to the first aspect of this application includes a battery cell 1 and at least one cooling member 6. The battery cell 1 includes a housing 11, at least one electrode assembly 12, and at least one buffer member 13. The electrode assembly 12 and the buffer member 13 are disposed in the housing 11. The buffer member 13 may be provided on at least part of a surface of the electrode assembly 12 and/or inside the electrode assembly 12. At least one electrode assembly 12 and at least one buffer member 13 are stacked along a first direction, and the cooling member 6 is provided on at least one side of the battery cell 1 along the first direction (with reference to FIG. 1). Exemplarily, the buffer member 13 may be provided between the electrode assembly 12 and the housing 11 (with reference to FIG. 2), and/or may be provided between two adjacent electrode assemblies 12 (with reference to FIG. 3), and/or may be provided inside the electrode assembly (with reference to FIG. 4). The buffer member 13 may be provided between the electrode assembly 12 and the housing 11, which can be understood as being provided in at least one of regions between the electrode assembly 12 and a side wall of the housing 11, between the electrode assembly 12 and a bottom wall of the housing 11, and between the electrode assembly 12 and a top wall of the housing 11. Optionally, with reference to FIG. 5, the buffer member 13 may be provided between the electrode assembly 12 and the housing 11 as well as between two adjacent electrode assemblies 12. Further optionally, with reference to FIG. 2 and FIG. 3, the buffer member 13 may be provided on part of the surface of the electrode assembly 12, for example, the buffer member 13 may be provided only on one side of the electrode assembly 12 along the first direction. In some specific examples, when the battery cell 1 includes only one electrode assembly 12, optionally the buffer member 13 may be provided only on one side of the electrode assembly 12 in the first direction (with reference to FIG. 2). In some other specific examples, when the battery cell 1 includes a plurality of electrode assemblies 12, optionally the buffer member 13 may be provided only between two adjacent electrode assemblies 12 in the first direction, and the electrode assemblies 12 and the buffer member 13 are alternately stacked in the first direction (with reference to FIG. 3). The buffer member 13 may be provided inside the electrode assembly, which can be understood as: when the electrode assembly 12 is a stacked structure, the buffer member 13 may be located in a central region of the electrode assembly 12, that is, in the first direction, stacked units are distributed on two sides of the buffer member 13, and the stacked units include a positive electrode sheet, a negative electrode sheet, and a separator; and when the electrode assembly 12 is a wound structure, the buffer member 13 may be located in a central region of the electrode assembly, that is, the buffer member 13 may serve as a winding center, and the positive electrode sheet, the negative electrode sheet, and the separator are stacked and then wound around the buffer member 13 for formation. In this case, when the wound electrode assembly is used in a cylindrical battery cell, the first direction may be a radial direction of the electrode assembly (with reference to FIG. 6). When the wound electrode assembly is used in a prismatic battery cell, the electrode assembly includes a flat portion and a corner portion after formation, and the first direction may be a thickness direction (with reference to FIG. 4) or a length direction of the flat portion, optionally a thickness direction of the flat portion. In actual operation, two sides of the buffer member 13 along a thickness direction of the buffer member 13 may both be fitted with the electrode assembly 12, or one side may be fitted with the electrode assembly 12, and the other side may be fitted with an inner wall of the housing 11.

Optionally, the thickness direction of at least one electrode assembly 12 is the same as the first direction (with reference to FIG. 2 to FIG. 5), and further optionally, the thickness direction of at least one buffer member 13 is the same as the thickness direction of the electrode assembly 12 (with reference to FIG. 2 to FIG. 5).

In addition, it can be understood that when the cooling member is provided on at least one side of the battery cell along the first direction, the cooling member may be in contact with or spaced from at least one side of the battery cell along the first direction, and the contact may include tight contact (with force applied) and or may include mere contact. Exemplarily, the cooling member may be provided on the surface of the battery cell along the first direction, or may be spaced from the battery cell, that is, other components may be provided between the cooling member and the battery cell, or battery cells may be provided, and the other components may include but are not limited to a fixing adhesive (the cooling member and the battery cell may be fixed through adhesion) and the like. In addition, the buffer member refers to a structural member that can undergo elastic deformation.

In the battery cell of this application, at least one electrode assembly and at least one buffer member are stacked along the first direction, and the cooling member is provided on at least one side of the battery cell along the first direction, where the provision of the buffer member can increase the fitting degree between the electrode assembly and the housing and also facilitates direct fitting of the electrode assembly with the inner wall of the housing or fitting with the inner wall of the housing through the buffer member or an insulating film even when the buffer member is not excessively compressed, thereby helping to maintain a high fitting degree between the electrode assembly and the inner wall of the housing during charge-discharge cycles of the electrode assembly. Increasing the fitting degree between the electrode assembly and the housing not only helps to shorten the heat conduction path between the electrode assembly and the housing, but also facilitates an increase in a contact heat exchange area between the electrode assembly and the housing, improving the self-heat dissipation effect of the battery cell, thereby improving the cooling efficiency. Further, the structure in which at least one electrode assembly and at least one buffer member are stacked along the first direction enables further increased fitting degree between the electrode assembly and the inner wall of the housing in the first direction and a further shortened heat conduction path. On this basis, the provision of the cooling member on at least one side of the battery cell along the first direction not only helps to shorten the heat conduction path between the electrode assembly and the cooling member in the first direction, but also helps to increase a relative heat exchange area between the electrode assembly and the cooling member in a portion where the heat conduction path is shortened in the first direction, thereby facilitating further improvement of cooling efficiency. It can be understood that the provision of the buffer member in the battery cell also helps to alleviate the volume change of the battery cell during charge-discharge cycles, thereby improving the cycling stability. The relative positional relationship between the battery cell and the cooling member, as well as the internal structure of the battery cell, can be determined by disassembling the battery.

The battery according to the first aspect of this application has the following beneficial effects: it helps to increase the fitting degree between the electrode assembly and the housing, shorten the heat conduction path, improve the self-heat dissipation of the battery cell and the heat conduction efficiency with the cooling member, and improve the heat dissipation effect of the battery.

It can be understood that in this embodiment of this application, the battery cell includes but is not limited to a housing, an electrode assembly, and a buffer member. For example, the battery cell may further include an electrolyte. In the embodiments of this application, the battery cell includes but is not limited to a secondary battery cell and a primary battery cell. In this embodiment of this application, the battery cell includes but is not limited to a lithium-ion battery cell, a sodium-ion battery cell, and a magnesium-ion battery cell. In this embodiment of this application, the battery cell includes but is not limited to a hard battery cell and a soft pack battery cell, where the hard battery cell includes but is not limited to a metal-housing battery cell.

Further, on the basis of satisfying the above conditions, the battery according to the first aspect of this application can further improve the relative positional relationship between the cooling member and the battery cell, the group margin of the battery cell, the difference in group margins between battery cells, the contact area between the battery cell and the cooling member, the thermal conductivity of the buffer member and its size relationship with other structural members, the arrangement region of the buffer member, and the like, to further improve the heat dissipation effect of the battery cell. That is, while the above conditions are satisfied, one or more of the following conditions are further optionally be satisfied.

In some embodiments of this application, the cooling member 6 includes but is not limited to commonly used cooling structural components, for example, the cooling member may include but is not limited to a cooling plate and a radiator.

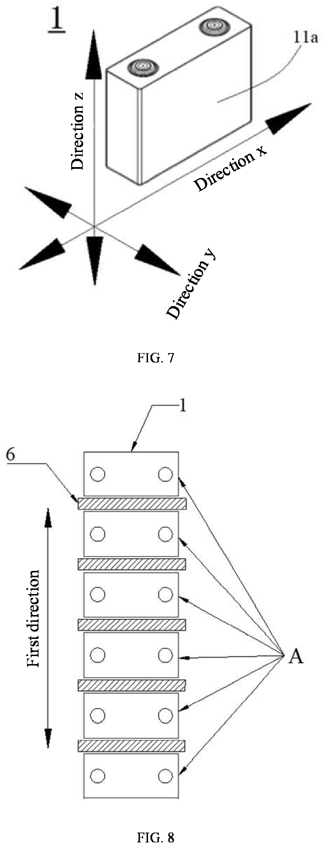

In some embodiments of this application, the battery cell may be cylindrical or prismatic, optionally prismatic. A prismatic battery cell may be a wound structure or a stacked structure. With reference to FIG. 6, when the battery cell is cylindrical, the first direction may be a radial direction of the electrode assembly. With reference to FIG. 7, when the battery cell is prismatic, the first direction is optionally at least one of a direction x, direction y, and direction z, that is, may be at least one of the length direction, thickness direction, and height direction of the housing. Taking FIG. 2 to FIG. 4 as an example, the first direction may be understood as a thickness direction of the housing 11. Taking FIG. 5 as an example, the first direction may be understood as a length direction of the housing 11. In addition, taking FIG. 5 as an example, it can be understood that the prismatic battery cell may include: at least one first buffer member 13a and/or at least one second buffer member 13b, and at least one of the first buffer member 13a and the second buffer member 13b may be stacked with at least one electrode assembly 12 along the first direction, optionally, the first direction may be the same as the thickness direction of the electrode assembly 12.

In some embodiments of this application, the battery may include: at least one first battery cell group A, where the first battery cell group A includes a plurality of battery cells 1 stacked along the first direction.

With reference to FIG. 8, in the battery cell, the electrode assembly and the inner wall of the housing have further increased fitting degree and further shortened heat conduction path in the first direction, and the cooling efficiency and heat dissipation effect of the battery cell in the first direction are relatively better. By stacking a plurality of battery cells along the first direction, the surfaces of the plurality of battery cells with relatively better cooling efficiency and heat dissipation effect can be concentrated in the first direction. Thus, in combination with the design of providing the cooling member on at least one side of the battery cell along the first direction, for example, the cooling member may be provided on at least one side of each battery cell along the first direction, which not only helps to further shorten the heat conduction path between the electrode assembly and the cooling member in the first direction and increase the relative heat exchange area between the electrode assembly and the cooling member in a portion where the heat conduction path is shortened in the first direction, but also helps to increase a total relative heat exchange area between the entire first battery cell group and the cooling member by optimizing the number of the cooling members and the relative positional relationship between the cooling members and the battery cells in the first direction, as well as guarantees the overall integration degree of the battery cells and the cooling members. Optionally, in the first direction, the cooling member may be provided between any two battery cells stacked and adjacently disposed along the first direction, thereby facilitating a further increase in the total relative heat exchange area between the entire first battery cell group and the cooling members, thereby providing cooling efficiency.

In some embodiments of this application, a plurality of first battery cell groups A may be stacked along a second direction, and the second direction may intersect the first direction.

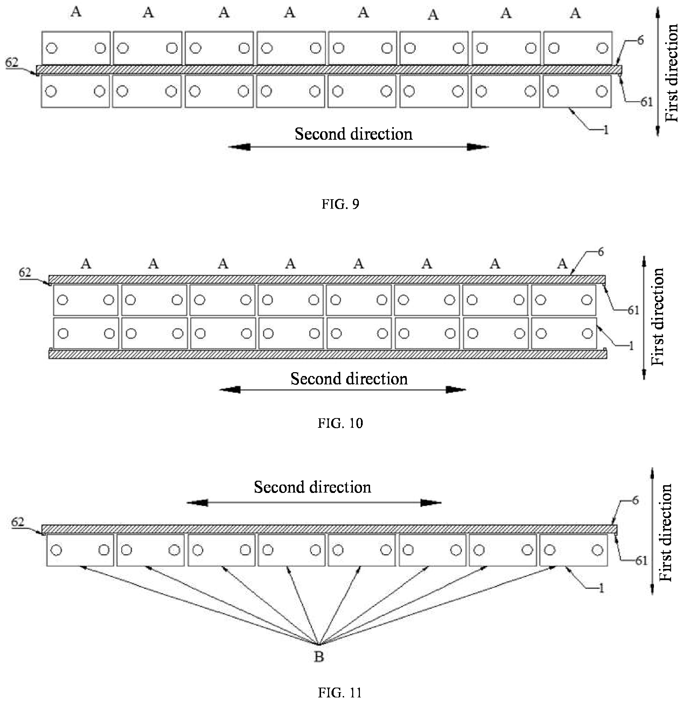

With reference to FIG. 9 or FIG. 10, the manner of stacking a plurality of first battery cell groups along the second direction also helps to realize an arrangement in which a single cooling member is simultaneously stacked with a plurality of battery cells along the first direction. This not only helps to increase the total heat exchange area between a single cooling member and the battery cells as well as increase the total heat exchange area between all battery cells and the cooling members in the entire battery, but also helps to guarantee the overall integration degree of the battery cells and the cooling members. Optionally, the second direction and the first direction may be perpendicular or substantially perpendicular, where substantially perpendicular means that an included angle between the second direction and the first direction may be 80 degrees to 100 degrees, optionally 85 degrees to 95 degrees, and further optionally 88 degrees to 92 degrees.

In some embodiments of this application, the battery includes a first battery cell group A, and in the first direction, the cooling member 6 may be provided between two adjacent battery cells 1, and/or the cooling member 6 may be provided on one side of a plurality of battery cells 1 along the first direction.

Exemplarily, with reference to FIG. 8 or FIG. 9, for a battery structure having a first battery cell group A, in the first direction, the cooling member 6 may be provided between two adjacent battery cells 1. This allows both the two sides of each cooling member distributed along the first direction to exchange heat with the surfaces of the battery cells, thereby facilitating an increase in the total heat exchange area between the entire first battery cell group and the cooling members. Optionally, in the first direction, the cooling member 6 and a plurality of battery cells 1 may be alternately stacked, and each cooling member 6 may be independently distributed between two adjacent battery cells 1. This manner helps to increase the total heat exchange area between the entire first battery cell group and the cooling members, shorten the heat conduction path, improve the heat dissipation efficiency of the battery, and simplify the battery structure.

Exemplarily, with reference to FIG. 10, for a battery structure having a first battery cell group A, in the first direction, the cooling member 6 may be provided on one side of a plurality of battery cells 1 along the first direction. This arrangement manner facilitates a further increase in the total heat exchange area between the battery cells distributed on two sides in the first direction and the cooling members, shorten the heat conduction path, and improve the heat dissipation efficiency of the battery.

Exemplarily, with reference to FIG. 8 to FIG. 10, for a battery structure having a first battery cell group A, in the first direction, some of the cooling members 6 may be provided between two adjacent battery cells 1, and some other of the cooling members 6 may be provided on one side of a plurality of battery cells 1 along the first direction. This manner helps to realize an arrangement in which two sides of each battery cell distributed along the first direction both exchange heat with the cooling members, facilitating a further increase in the total heat exchange area between the entire first battery cell group and the cooling members, thereby improving the heat dissipation efficiency of the battery.

For a structure in which the battery includes one first battery cell group A and a structure in which the battery includes a plurality of first battery cell groups A stacked along the second direction, making the relative positional relationship between the cooling members and the battery cells satisfy the given conditions helps to increase the total heat exchange area between the entire first battery cell group and the cooling members, shorten the heat conduction path, and improve the heat dissipation efficiency and effect of the battery.

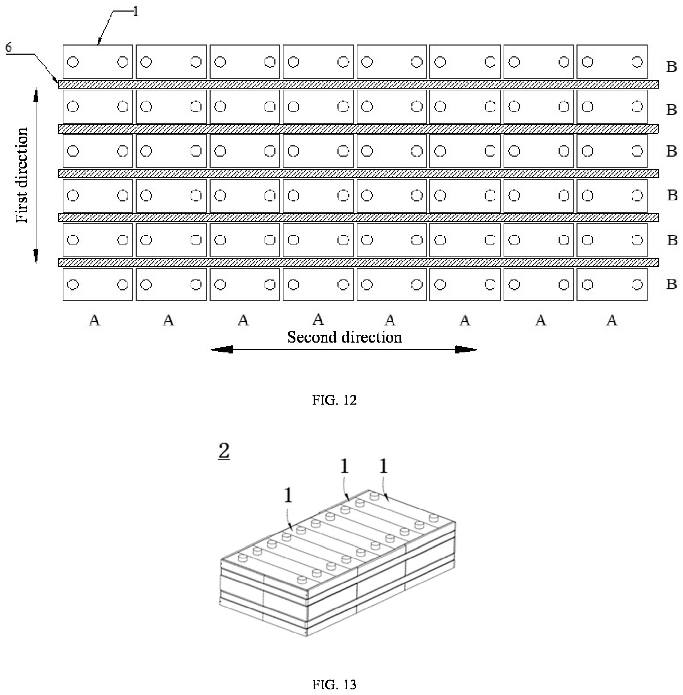

In some embodiments of this application, the battery may include: at least one second battery cell group B, where the second battery cell group B may include a plurality of battery cells 1 stacked along a second direction, and the second direction intersects the first direction. Exemplarily, with reference to FIG. 11, the battery may include only one second battery cell group B. Exemplarily, with reference to FIG. 12, the battery may include a plurality of second battery cell groups B. Optionally, the plurality of second battery cell groups B may be stacked along the first direction. The battery structure design in which one or more second battery cell groups are provided also helps to guarantee both the heat dissipation efficiency of the battery cells and the integration degree of the battery cells. Optionally, the battery may include both a plurality of first battery cell groups A and a plurality of second battery cell groups B. Further optionally, as described above, the second direction and the first direction may be perpendicular or substantially perpendicular.

In some embodiments of this application, the battery includes a second battery cell group B, and in the first direction, the cooling member 6 may be provided between two adjacent battery cells 1, and/or the cooling member 6 may be provided on one side of a plurality of battery cells 1 along the first direction.

Exemplarily, with reference to FIG. 11, when the battery includes only one second battery cell group B, only one cooling member 6 may be provided, where the cooling member 6 is located on one side of the second battery cell group B along the first direction. Alternatively, two cooling members 6 may be provided, where the two cooling members 6 are separately located on two sides of the second battery cell group B along the first direction. In the above arrangement, each cooling member 6 is independently provided on one side of a plurality of battery cells 1 along the first direction.

Exemplarily, with reference to FIG. 12, when the battery includes a plurality of second battery cell groups B, in the first direction, the cooling member 6 may be provided between two adjacent battery cells 1. For example, in the first direction, the cooling member 6 may be alternately stacked with a plurality of second battery cell groups B, and each cooling member 6 may be independently distributed between two adjacent second battery cell groups B. This allows both the two sides of each cooling member distributed along the first direction to exchange heat with the surfaces of a plurality of battery cells, thereby not only helping to increase the total heat exchange area between the entire second battery cell group and the cooling members but also helping to simplify the battery structure.

Exemplarily, with reference to FIG. 11 and FIG. 12, when the battery includes a plurality of second battery cell groups B, in the first direction, some of the cooling members 6 may be provided between two adjacent battery cells 1, and some other of the cooling members 6 may be provided on one side of a plurality of battery cells 1 along the first direction. This manner helps to realize an arrangement in which both the two sides of each battery cell distributed along the first direction exchange heat with the cooling members, facilitating a further increase in the total heat exchange area between the entire second battery cell group and the cooling members, thereby improving the heat dissipation efficiency of the battery.

In some embodiments of this application, the battery cell 1 may include two first surfaces 11a oppositely disposed along the first direction, and an area of the first surface 11a may be greater than or equal to an area of any single surface among other surfaces of the battery cell 1.

With reference to FIG. 1 and FIG. 7, taking a prismatic battery cell 1 as an example, the battery cell 1 may include a plurality of surfaces. When an area of a single first surface 11a among the two first surfaces 11a oppositely disposed along the first direction of the battery cell is greater than or equal to an area of any single surface among the remaining other surfaces in the battery cell 1 to which this single first surface belongs, the first surface 11a can have the largest area that can be oppositely disposed or fitted with the cooling member compared to other surfaces, thereby facilitating further increase of the total heat exchange area between the battery cell and the cooling member, improving the heat dissipation efficiency and effect of the battery.

In some embodiments of this application, the area of the orthographic projection of the buffer member 13 stacked with the electrode assembly 12 along the first direction on the first surface 11a may be greater than or equal to 80% of the area of the first surface 11a.

For example, with reference to FIG. 1 and FIG. 7, the area of the orthographic projection of the buffer member 13 stacked with the electrode assembly 12 along the first direction on the first surface 11a may be 80%, 85%, 90%, 95%, 98%, or the like of the area of the first surface 11a. In this application, the area of the first surface may be understood as an area of a side of the first surface facing the interior of the housing. The area of the first surface and the area of the orthographic projection of the buffer member on the first surface can be independently measured using conventional methods. For example, the area of the first surface may be measured by direct measurement, colorimetry, or other methods, and the area of the orthographic projection of the buffer member on the first surface may be measured by direct measurement, segmentation summation, projection area formula, three-dimensional modeling software, or other methods. The projection area of the buffer member on the first surface reflects, to some extent, an area where the electrode assembly and the first surface can be oppositely disposed or fitted. An increase in this projection area facilitates an increase in the area where the electrode assembly and the first surface can be oppositely disposed or fitted, thereby increasing the fitting degree between the electrode assembly and the housing.

Making the area of the orthographic projection of the buffer member on the first surface satisfy the given condition facilitates a further increase in the fitting degree between the electrode assembly and the housing while increasing the total heat exchange area between the battery cell and the cooling member, thereby facilitating further improvement of the heat dissipation efficiency of the battery cell.

In some embodiments of this application, in the first direction, the cooling member 6 may be provided between every two of a plurality of battery cells 1. With reference to FIG. 8 or FIG. 12, this arrangement facilitates a further increase in the total heat exchange area between all battery cells and the cooling members in the entire battery, improving the heat dissipation efficiency and effect of the battery.

In some embodiments of this application, a first group margin of the battery cell 1 may be greater than or equal to 95%, optionally greater than or equal to 100%; and a second group margin of the battery cell 1 may be greater than or equal to 90%, optionally greater than or equal to 95%. The first group margin refers to: in the first direction, a ratio of a sum of a total thickness of the buffer member 13 in the battery cell 1 in a free state and a maximum total dimension of the electrode assembly 12 in a fully charged state to a distance between inner wall surfaces of the housing 11; and the second group margin refers to: in the first direction, a ratio of the maximum total dimension of the electrode assembly 12 in the battery cell 1 in a fully charged state to the distance between inner wall surfaces of the housing 11.

Exemplarily, the first group margin of the battery cell 1 may be 95%, 97%, 100%, 102%, 105%, 108%, 110%, or the like, or may be a range defined by any values among these values. An increase in the group margin of the battery cell facilitates a further increase in the fitting degree between the electrode assembly and the housing, thereby improving the heat dissipation efficiency and effect. Controlling the first group margin of the battery cell to satisfy the given range condition helps to further achieve higher heat dissipation efficiency and effect. Exemplarily, the second group margin of the battery cell 1 may be 90%, 91%, 92%, 93%, 94%, 95%, 96%, 97%, 98%, 99%, 100%, or the like, or may be a range defined by any values among these values. An increase in the second group margin of the battery cell facilitates further improvement of the energy density of the battery. In addition, comprehensively controlling the first group margin and the second group margin of the battery cell to satisfy the given ranges can further increase the fitting degree between the electrode assembly and the housing while guaranteeing the energy density of the battery, thereby improving the heat exchange efficiency and effect.

The free state of the buffer member refers to a state in which the buffer member is not subjected to any external force, and a thickness test of the buffer member in a free state can be performed using conventional instruments and conventional methods in the art, for example, using a Mitutoyo ID-C112MX micrometer thickness tester (or similar instrument) under a test force of less than or equal to 1.8 N, where a plurality of points (such as 5 or 10) are randomly measured, and an average value is taken. The thickness of the buffer member in a stressed state may be tested in a manner as follows: two parallel flat plates are used, with the buffer member placed between the flat plates, a predetermined pressure is applied to the buffer member using the flat plates, and a distance between the flat plates is measured. Instruments used for measuring the distance between the flat plates may include but are not limited to vernier calipers and other conventional instruments. The fully charged state refers to a state in which the battery cell is charged at a constant current of 0.33C of the rated capacity to an upper limit of a cutoff voltage at room temperature and then charged at a constant voltage until the current is 0.05C, or charged under this condition until the SOC of the battery no longer changes.

In the battery cell, the total thickness of the buffer member in a free state in the first direction refers to a cumulative value of the thicknesses of one or more buffer members stacked with the electrode assembly along the first direction; the maximum total dimension of the electrode assembly in a fully charged state in the first direction refers to a maximum extension distance of all electrode assemblies in the battery cell in the first direction when the battery cell is in a fully charged state at room temperature; and the distance between the inner wall surfaces of the housing in the first direction refers to a distance between the inner wall surfaces along the first direction when the housing is in a free state (that is, a state in which the housing is not subjected to any external force). When the battery cell is prismatic battery cell, the distance between the inner wall surfaces of the housing along the first direction may be understood as the average distance, and when the battery cell is cylindrical, the distance between the inner wall surfaces of the housing along the first direction may be understood as a maximum distance. Exemplarily:

Taking FIG. 3 as an example in which the battery cell is a prismatic battery, only two electrode assemblies and one buffer member are stacked along the first direction in the housing, the total thickness of the buffer member in a free state in the first direction refers to a thickness d₁ of a single buffer member in a free state; the maximum total dimension of the electrode assembly in a fully charged state in the first direction is a distance sum d₂ of the two electrode assemblies in the first direction; the distance between the inner wall surfaces of the housing in the first direction refers to an average distance d₃ between inner surfaces of two side walls oppositely disposed along the first direction when the housing is in a free state; and in this case, the first group margin is (d₁+d₂)/d₃×100%, and the second group margin is d₂/d₃×100%.

Taking FIG. 5 as an example in which the battery cell is a prismatic battery, two electrode assemblies and three buffer members are provided in the housing, where the two electrode assemblies and two second buffer members 13b are stacked along the first direction, the total thickness of the buffer member in a free state in the first direction refers to a thickness sum d₁' of the two second buffer members in a free state; the maximum total dimension of the electrode assembly in a fully charged state in the first direction is a total projection length d₂' of the two electrode assemblies in the first direction (when the projection lengths of the two electrode assemblies in the first direction are the same, d₂' may also be regarded as the distance of a single electrode assembly in the first direction); the distance between the inner wall surfaces of the housing in the first direction refers to an average distance d₃' between inner surfaces of two side walls oppositely disposed along the first direction when the housing is in a free state; and in this case, the first group margin is (d₁'+ d₂')/d₃'×100%, and the second group margin is d₂'/d₃'×100%.

Taking FIG. 6 as an example, when the battery cell is cylindrical, the first direction is a radial direction of the electrode assembly, and the distance between the inner wall surfaces of the housing along the first direction is an inner cavity diameter of the housing in a free state, and the diameter may be an average value of a plurality of measured values.

The dimension of the electrode assembly in a fully charged state in the first direction may be measured using conventional methods or conventional instruments in the art. For instance, in an example in which the thickness direction of the electrode assembly (when the electrode assembly is a wound structure and includes a flat portion and a corner portion, the thickness of the electrode assembly may be understood as a thickness of the flat portion) is the same as the first direction, the distance of a single electrode assembly in the first direction may be tested using the following method: two parallel flat plates are used, with the electrode assembly placed between the flat plates, a pressure of 0.1 MPa is applied to the electrode assembly using the flat plates, a distance between the flat plates is measured to obtain the thickness of the electrode assembly. Optionally, an Yinghaoda PPG1200 battery thickness measuring instrument is used for testing. The distance between the inner wall surfaces of the housing in the first direction may also be tested using conventional instruments and conventional methods in the art.

In some embodiments of this application, the first group margin of the battery cell 1 is less than or equal to 108%, optionally less than or equal to 105%; and/or, the second group margin of the battery cell 1 is less than or equal to 100%, optionally less than or equal to 98%%.

Exemplarily, the first group margin of the battery cell 1 may be 108%, 107%, 106%, 105%, 104%, 103%, 102%, or the like. Reducing the group margin of the battery cell facilitates improvement of the volume stability of the battery cell during charge-discharge cycles. Controlling the first group margin to satisfy the given condition helps to reduce the swelling force of the electrode assembly during charge-discharge, improve the volume stability of the battery during charge-discharge cycles, and reduce the risk of the cycling stability of the battery being affected by excessive swelling force of the electrode assembly during charge-discharge. Optionally, the first group margin may be less than or equal to 105%, further optionally, the first group margin may be 95% to 105%, and still further optionally, the first group margin may be 100% to 105%. Satisfying the given condition helps to further guarantee both the heat dissipation efficiency and the cycling stability of the battery.

Exemplarily, the second group margin of the battery cell 1 may be 100%, 99%, 98%, 97%, 96%, 95%, or the like. The second group margin of the battery cell satisfying the given condition facilitates assembly of battery components into the housing, facilitating assembly of the battery cell. Optionally, the second group margin may be less than or equal to 98%. This helps to further guarantee the assembly of the battery cell.

In some embodiments of this application, a cooling medium flow channel (not shown) may be provided inside the cooling member 6, the cooling medium flow channel may include an inlet 61 and an outlet 62, and the first group margin of the battery cell 1 located on a side of the outlet 62 may be greater than or equal to the first group margin of the battery cell 1 located on a side of the inlet 61.

Optionally, the first group margin of the battery cell 1 located on a side of the outlet 62 may be greater than the first group margin of the battery cell 1 located on a side of the inlet 61. With reference to FIG. 9, in a flow direction of a cooling medium, as the cooling medium continuously flows and exchanges heat, the temperature of the cooling medium gradually rises, and the cooling effect of the cooling medium on the battery cell in a direction from the inlet 61 toward the outlet 62 may decrease to some extent. Making the first group margin of the battery cell 1 located on a side of the outlet 62 be greater than the first group margin of the battery cell 1 located on a side of the inlet 61 facilitates a further increase in the fitting degree between the electrode assembly and the housing in the battery cell close to a side of the outlet, thereby facilitating an increase in the heat exchange area and contact time between the battery cell close to a side of the outlet and the cooling member, and compensating for the reduced cooling effect of the cooling member on the battery cell close to a side of the outlet 62 caused by the temperature rise of the cooling medium. This not only helps to further improve the heat dissipation effect of the battery, but also helps to maintain the uniformity of the overall temperature of each battery cell in the battery, thereby reducing the risk of significantly higher temperature in local regions.

In some embodiments of this application, a difference between the first group margin of the battery cell 1 located on a side of the outlet 62 and the first group margin of the battery cell 1 located on a side of the inlet 61 may be less than or equal to 5%.

Exemplarily, with reference to FIG. 9, the difference between the first group margin of the battery cell 1 located on a side of the outlet 62 and the first group margin of the battery cell 1 located on a side of the inlet 61 may be 5%, 4.5%, 4%, 3.5%, 3%, 2.5%, 2%, 1.5%, 1%, 0.5%, or the like. Reducing the difference in group margin between the battery cell on a side of the outlet 62 and the battery cell on a side of the inlet 61 helps to reduce the risk of uneven stress distribution and degraded volume stability of the battery caused by different swelling forces of the battery cells at different positions during charge-discharge. Controlling the first group margin distribution of the battery cells to satisfy the given condition not only helps to improve the overall heat dissipation effect of the battery and maintain the uniformity of the overall temperature of each battery cell in the battery, but also guarantees the overall volume stability of the battery.

In some embodiments of this application, a difference between the second group margin of the battery cell 1 located on a side of the outlet 62 and the second group margin of the battery cell 1 located on a side of the inlet 61 may be less than or equal to 1%, optionally 0. Exemplarily, with reference to FIG. 9, the difference between the second group margin of the battery cell 1 located on a side of the outlet 62 and the second group margin of the battery cell 1 located on a side of the inlet 61 may be 1%, 0.5%, 0.1%, 0, or the like. The second group margins of the battery cells satisfying the given condition are substantially the same, facilitating control of the change in the first group margin of each battery cell distributed along the direction of the cooling medium flow channel by adjusting the thickness change of the buffer member, thereby realizing a structural design in which the first group margins of a plurality of battery cells distributed along the direction from the inlet toward the outlet gradually increase or are equal.

In some embodiments of this application, the first group margins of a plurality of battery cells 1 distributed along the direction from the inlet 61 toward the outlet 62 may gradually increase, and the difference between the first group margin and the second group margin of the battery cell 1 located on a side of the outlet 62 may be greater than the difference between the first group margin and the second group margin of the battery cell 1 located on a side of the inlet 61. With reference to FIG. 9, satisfying the given condition helps to further improve the overall heat dissipation effect of the battery and maintain the uniformity of the overall temperature of each battery cell in the battery. Optionally, the first group margins of a plurality of battery cells 1 distributed along the direction from the inlet 61 toward the outlet 62 may gradually increase, and the second group margins may remain unchanged or substantially the same (that is, the difference between the second group margins of any two battery cells is less than or equal to 1%).

In some embodiments of this application, the battery may include: a plurality of cooling members 6, where cooling medium flow channels of the plurality of cooling members 6 may be arranged in parallel and/or in series.

It should be noted that the parallel arrangement means that the cooling medium flow channels of the plurality of cooling members 6 are independent of each other and do not communicate with each other; while the series arrangement means that the inlets and outlets of the cooling medium flow channels of the plurality of cooling members 6 are connected end to end and directly or indirectly communicate with each other. The arrangement manner of the direct cooling flow channels of the plurality of cooling members may be flexibly adjusted according to a stacking manner of the battery cells. For example, taking the first direction and the second direction shown in FIG. 9 as an example, if there is a large number of battery cells stacked in the second direction, a parallel arrangement manner for the cooling medium flow channels of the plurality of cooling members may be considered; if there is a small number of battery cells stacked in the second direction, a series arrangement manner for the cooling medium flow channels of the plurality of cooling members may be considered; in addition, according to a specific arrangement manner of the battery cells, the cooling medium flow channels of some cooling members may be arranged in series, and the cooling medium flow channels of the remaining cooling members may be arranged in parallel. This is more conducive to guaranteeing the cooling effect on the battery and the reuse of the cooling medium.

In some embodiments of this application, a plurality of cooling members 6 may be connected through a connecting member (not shown), and the cooling medium flow channels of two cooling members 6 adjacent to each other and spaced apart in the first direction may be arranged in a communicating manner through the connecting member.

Exemplarily, the connecting member may be a cooling medium supply end and/or a cooling medium output end, the supply end and the output end may independently be a conveying pipe or a conveying panel, the inlets of the cooling medium flow channels of the plurality of cooling members 6 may each independently be connected to the cooling medium supply end, and/or the outlets of the cooling medium flow channels of the plurality of cooling members 6 may each independently be connected to the cooling medium output end; and/or, the connecting member may be a conveying pipe or conveying panel for realizing end-to-end connection of the cooling medium flow channels of two different cooling members. The above arrangement manner, on one hand, helps to realize filling and flowing of the cooling medium in different cooling medium flow channels, and on the other hand, helps to further increase a contact area between the battery cell and the cooling medium, thereby improving the heat dissipation effect.

In some embodiments of this application, the battery cell 1 may include two second surfaces oppositely disposed along the first direction, at least one of the two second surfaces may be in contact with the cooling member 6, and a contact area between the second surface and the cooling member 6 may be greater than or equal to 80% of the area of the second surface, optionally 80% to 100% of the area of the second surface, and further optionally 90% to 100% of the area of the second surface.

Exemplarily, with reference to FIG. 7 and FIG. 8, the second surface may be fitted with the cooling member. Optionally, both the two second surfaces may be in contact with the cooling member. As compared to radiative heat dissipation, direct contact between the surface of the battery cell and the cooling member can further shorten the heat conduction path, thereby improving the heat dissipation efficiency and effect of the battery cell.

Exemplarily, the contact area between the second surface and the cooling member 6 may be 80%, 85%, 90%, 95%, 100%, or the like of the area of the second surface. The contact area between the second surface and the cooling member 6 may be measured using conventional methods, for example, using direct measurement or colorimetry. An increase in the contact area between the surface of the battery cell and the cooling member can increase the heat exchange area, shorten the heat conduction path, and improve the heat dissipation efficiency and effect. Optionally, the area of a single second surface may be greater than or equal to the area of any single surface among the remaining other surfaces in the battery cell to which this single second surface belongs, thereby making the second surface have the largest area that can be fitted with the cooling member compared to other surfaces. This helps to further increase the heat exchange area between the battery cell and the cooling member, thereby improving the heat dissipation efficiency and effect of the battery.

Controlling the contact area between the second surface and the cooling member to satisfy the given range helps to further improve the heat dissipation efficiency and effect.

In some embodiments of this application, a total contact area between a single battery cell 1 and the cooling member 6 may be greater than or equal to 20% of a total surface area of the battery cell, optionally greater than or equal to 25% of the total surface area of the battery cell.

Exemplarily, the total contact area between a single battery cell 1 and the cooling member 6 may be 20%, 25%, 30%, 35%, 40%, or the like of the total surface area of the battery cell, or may be a range defined by any values among these values. The total contact area between a single battery cell 1 and the cooling member 6 refers to a sum of contact areas between all surfaces of the battery cell and each cooling member. Increasing the total contact area between a single battery cell 1 and the cooling member 6 can increase the heat exchange area, shorten the heat conduction path, and improve the heat dissipation efficiency and effect.

Controlling the total contact area between a single battery cell and the cooling member to satisfy the given range helps to further improve the heat dissipation efficiency and effect.

In some embodiments of this application, in the battery cell 1, the buffer member 13 may be provided between part of the surface of the electrode assembly 12 and the housing 11.

The provision of the buffer member 13 between the electrode assembly 12 and the housing 11 can make the surface of the electrode assembly in contact with the buffer member 13 indirectly contact the housing, to buffer the swelling force of the electrode assembly during charge-discharge, thereby improving the volume stability of the battery during charge-discharge cycles, and direct contact between the electrode assembly and the housing further helps to improve the heat dissipation effect of the battery cell. However, the provision of the buffer member only between part of the surface of the electrode assembly and the housing facilitates good fitting degree and abutting area between the electrode assembly and the housing, thereby improving the heat dissipation efficiency and effect. Optionally, with reference to FIG. 2, when the battery cell 1 includes only one electrode assembly 12, the buffer member 13 may be provided only on one of the two sides oppositely disposed along the first direction of the electrode assembly 12, and in this case, the cooling member 6 may be provided on the other side of the battery cell 1 along the first direction where the buffer member 13 is not provided. Further optionally, with reference to FIG. 3, when the battery cell 1 includes a plurality of electrode assemblies 12, the buffer member 13 may be provided only between two adjacently disposed electrode assemblies 12 along the first direction, while no buffer member is provided between the electrode assembly 12 and the housing 11 in the first direction, and in this case, the cooling member 6 may be provided on at least one of the two sides oppositely disposed along the first direction of the battery cell 1. This helps to maintain a good fitting degree between the electrode assembly and the housing during charge-discharge cycles, thereby further helping to increase the heat dissipation area, shorten the heat conduction path, and improve the heat dissipation efficiency and effect of the battery.

In some embodiments of this application, a thermal conductivity of the buffer member 13 provided between the electrode assembly 12 and the housing 11 may be greater than or equal to 3 W/(m·°C), optionally greater than or equal to 5 W/(m·°C).

Exemplarily, the thermal conductivity of the buffer member 13 provided between the electrode assembly 12 and the housing 11 may be greater than or equal to 3 W/(m·°C), greater than or equal to 5 W/(m·°C), greater than or equal to 10 W/(m·°C), greater than or equal to 15 W/(m·°C), greater than or equal to 20 W/(m·°C), greater than or equal to 25 W/(m·°C), greater than or equal to 30 W/(m·°C), greater than or equal to 35 W/(m·°C), or the like, optionally greater than or equal to 5 W/(m·°C). A higher thermal conductivity facilitates rapid transfer of heat inside the battery cell to the outside, thereby improving the heat dissipation effect of the battery cell. The thermal conductivity of the buffer member may be measured with reference to GB/T 10295. Satisfying the given range condition can improve the heat conduction efficiency of the buffer member, thereby improving the heat dissipation effect of the battery cell.

In some embodiments of this application, in the battery cell 1, the buffer member 13 may be provided between two adjacent electrode assemblies 12. Optionally, when the battery cell 1 includes a plurality of electrode assemblies 12, the buffer member 13 may be provided only between two adjacent electrode assemblies 12. With reference to FIG. 3, this arrangement further helps to maintain a good fitting degree between the electrode assembly and the housing during charge-discharge cycles all the time, which not only helps to shorten the heat conduction path between the electrode assembly and the housing, but also can increase the relative heat dissipation area between the electrode assembly and the housing in a portion where the heat conduction path is shortened, thereby improving the heat dissipation efficiency and effect of the battery.

In some embodiments of this application, the thermal conductivity of the buffer member 13 provided between two adjacent electrode assemblies 12 may be less than or equal to 0.05 W/(m·°C), optionally less than or equal to 0.03 W/(m·°C).

Exemplarily, the thermal conductivity of the buffer member 13 provided between two adjacent electrode assemblies 12 may be less than or equal to 0.05 W/(m·°C), less than or equal to 0.04 W/(m·°C), less than or equal to 0.03 W/(m·°C), less than or equal to 0.02 W/(m·°C), less than or equal to 0.01 W/(m·°C), less than or equal to 0.005 W/(m·°C), or the like, optionally less than or equal to 0.03 W/(m·°C). A lower thermal conductivity facilitates isolation of heat conduction between battery assemblies, reducing the risk of failure of one electrode assembly triggering failure of another electrode assembly. Therefore, the above arrangement helps to reduce the probability of thermal runaway of the battery cell.

In some embodiments of this application, the electrode assembly 12 may further include a separator (not shown), and a thermal conductivity of the separator may be greater than or equal to the thermal conductivity of the buffer member 13.

Optionally, the thermal conductivity of the separator may be greater than the thermal conductivity of the buffer member. An outermost layer of the electrode assembly 12 is covered with the separator. When no buffer member is provided between the electrode assembly and the housing, adopting a separator satisfying the given condition facilitates further improvement of the efficiency of outward transfer of heat generated by the electrode assembly. Moreover, even if the buffer member is provided between the electrode assembly and the housing, adopting a separator satisfying the given condition also facilitates improvement of the heat conduction of the electrode assembly. Therefore, making the thermal conductivity of the separator satisfy the given condition facilitates improvement of the heat dissipation efficiency and effect of the battery.

In some embodiments of this application, the battery cell 1 may further include: an insulating film (not shown), where the insulating film may wrap at least part of the surface of the electrode assembly; and in the first direction, each electrode assembly 12 is stacked with at least one insulating film layer, and the thermal conductivity of the insulating film is greater than or equal to the thermal conductivity of the buffer member. The provision of the insulating film on the outer surface of the electrode assembly can reduce the risk of electric leakage caused by direct contact between the electrode assembly and the housing (such as a metal housing), and further making the thermal conductivity of the insulating film be greater than or equal to the thermal conductivity of the buffer member also facilitates improvement of the efficiency of outward transfer of heat generated by the electrode assembly and reduction of heat conduction between battery assemblies, thereby improving the heat dissipation efficiency and effect of the battery.

In some embodiments of this application, a third group margin of the battery cell 1 may be greater than or equal to 95%, optionally greater than or equal to 100%. The third group margin refers to: in the first direction, a ratio of a sum of the total thickness of the buffer member in the battery cell in a free state, the maximum total dimension of the electrode assembly in a fully charged state, and a total thickness of the insulating film to the distance between inner wall surfaces of the housing.

Exemplarily, the third group margin of the battery cell 1 may be 95%, 97%, 100%, 102%, 105%, 108%, 110%, or the like. An increase in the third group margin of the battery cell facilitates a further increase in the fitting degree between the electrode assembly and the housing, thereby improving the heat dissipation efficiency and effect. Controlling the third group margin to satisfy the given range helps to further achieve higher heat dissipation efficiency and effect while reducing the risk of electric leakage of the battery cell. The total thickness of the insulating film in the first direction can be obtained by determining the number of stacked insulating film layers in the first direction and the thickness of the insulating film, and a thickness test of the insulating film can be performed using conventional instruments and methods in the art. Optionally, the third group margin may be greater than or equal to the first group margin, further optionally greater than the first group margin. Optionally, the third group margin may be less than or equal to 108%, further optionally less than or equal to 105%, and still further optionally 100% to 105%. Satisfying the given condition also helps to guarantee the volume stability of the battery cell during charge-discharge cycles.

In some embodiments of this application, the battery cell 1 may include at least two electrode assemblies 12, and each buffer member 13 in the battery cell 1 may be independently provided between two adjacent electrode assemblies 12 and stacked with the electrode assemblies 12 along the first direction. This arrangement not only helps to increase the fitting degree between the electrode assembly and the housing, but also helps to realize direct contact between the electrode assembly and the inner wall of the housing, thereby helping to shorten the heat conduction path and improve the heat dissipation efficiency and effect of the battery.

In some embodiments of this application, the battery cell 1 may include two third surfaces oppositely disposed along the first direction, and an orthographic projection of the buffer member 13 stacked with and disposed adjacent to the electrode assembly 12 along the first direction on the third surface may be located within a region of an orthographic projection of the electrode assembly 12 on the third surface. The relative positions and projection areas of the orthographic projection of the buffer member 13 on the third surface and the orthographic projection of the electrode assembly 12 on the third surface reflect an overlap area between the buffer member 13 and the electrode assembly. The orthographic projections of the buffer member and the electrode assembly on the third surface satisfy the given condition can be made to satisfy the given condition by controlling an area of a larger surface of the buffer member to be less than or equal to an area of the surface of the electrode assembly fitted and stacked therewith. This not only helps to increase the fitting degree between the electrode assembly and the housing, shorten the heat conduction path, and improve the heat dissipation efficiency and effect of the battery, but also helps to guarantee the energy density of the battery cell.

In some embodiments of this application, the area of the orthographic projection of the buffer member 13 stacked with and disposed adjacent to the electrode assembly 12 along the first direction on the third surface is greater than or equal to 80% of the area of the orthographic projection of the electrode assembly 12 on the third surface. Exemplarily, the area of the orthographic projection of the buffer member 13 stacked with and disposed adjacent to the electrode assembly 12 along the first direction on the third surface is greater than or equal to 80%, 85%, 90%, 95%, 100%, or the like of the area of the orthographic projection of the electrode assembly 12 on the third surface. The relative positions and projection areas of the orthographic projection of the buffer member 13 on the third surface and the orthographic projection of the electrode assembly 12 on the third surface reflect the overlap area between the buffer member 13 and the electrode assembly. An increase in this overlap area helps to increase the fitting degree between the electrode assembly and the housing. Making the orthographic projections of the buffer member and the electrode assembly on the third surface satisfy the given condition not only helps to increase the fitting degree between the electrode assembly and the housing, but also helps to improve the uniformity of stress distribution in the battery cell during charge-discharge, thereby facilitating further improvement of the heat dissipation efficiency of the battery cell and volume stability during cycling. Optionally, the area of a single third surface may be greater than or equal to an area of any single surface among the remaining other surfaces of the battery cell, thereby making the third surface have the largest area that can be oppositely disposed or fitted with the cooling member compared to other surfaces. This not only helps to further increase the fitting degree between the electrode assembly and the housing, but also helps to increase the heat exchange area between the battery cell and the cooling member, thereby improving the heat dissipation efficiency and effect.

It can be understood that in the battery cell according to the first aspect of this application, the structure and material of the buffer member 13 are not particularly limited as long as it can undergo elastic deformation. Exemplarily, at least one of the material, porosity, pore size, and the like of the buffer member can be adjusted to obtain buffer members with different stress-strain relationships, thereby realizing different compression rates of the buffer member along its thickness direction under different stresses.

Exemplarily, the buffer member may be a single-layer structure, and its material may include but is not limited to at least one of foamed polyethylene, polypropylene, polyurethane, silicone rubber, and the like.

Exemplarily, the buffer member may be a multi-layer structure, and specifically may include an elastic buffer layer and a support layer, where the support layer may be provided on at least one of two sides of the elastic buffer layer along a thickness direction of the elastic buffer layer. Optionally, an elastic modulus of the elastic buffer layer is less than an elastic modulus of the support layer; and/or, under the same pressure, the compression rate of the elastic buffer layer along the thickness direction of the elastic buffer layer is greater than the compression rate of the support layer along a thickness direction of the support layer; and/or, a porosity of the elastic buffer layer may be greater than a porosity of the support layer, for example, the porosity of the elastic buffer layer may be 40% to 95%, optionally 55% to 90%, and further optionally 70% to 85%, and the porosity of the support layer may be less than or equal to 5%. Further optionally, the elastic buffer layer may include at least one of foamed polyethylene, polypropylene, polyurethane, and silicone rubber, and the support layer may include but is not limited to at least one of high-density polyethylene, polymethyl methacrylate, polyethylene terephthalate, and polytetrafluoroethylene. Still further optionally, at least one of the following conditions may be satisfied: a thickness of the elastic buffer layer may be greater than a thickness of the support layer; in a single buffer member, a ratio of a total thickness of the support layer to a free thickness of the elastic buffer layer may be 0.005 to 0.1, such as 0.02 to 0.05; a thickness of the elastic buffer layer in a natural state may be 0.2 mm to 10 mm; and a thickness of a single support layer may be 30 µm to 200 µm; and the elastic buffer layer and the support layer may be bonded. The support layer and the elastic buffer layer may be laminated to provide support for the elastic buffer layer. This not only inhibits thermal shrinkage of the elastic buffer layer (such as thermal shrinkage during vacuum baking), optionally inhibiting thermal shrinkage of the elastic buffer layer in a two-dimensional direction perpendicular to the thickness direction of the elastic buffer layer by using the support layer, thereby alleviating the problem that the elastic buffer layer loses its original function due to thermal shrinkage. In addition, a material damage problem of the buffer member caused by mechanical stress in a late use stage of the battery can also be alleviated. Therefore, placing this buffer member inside the battery cell facilitates further improvement of the volume stability of the battery during long-term use, thereby improving long-term use performance.

In some embodiments of this application, the electrode assembly 12 may include a positive electrode sheet, a negative electrode sheet, and a separator. The positive electrode sheet, the negative electrode sheet, and the separator may form the electrode assembly through a winding process. During charge-discharge of the battery, active ions intercalate and deintercalate back and forth between the positive electrode sheet and the negative electrode sheet. The separator is provided between the positive electrode sheet and the negative electrode sheet for isolation. Specific structures, raw material compositions, thicknesses, and the like of the positive electrode sheet, the negative electrode sheet, and the separator may all be conventional choices in the art, and those skilled in the art can choose according to actual needs.

The battery according to the first aspect of this application is optionally a secondary battery. For example, the battery may be a lithium-ion secondary battery or the like.

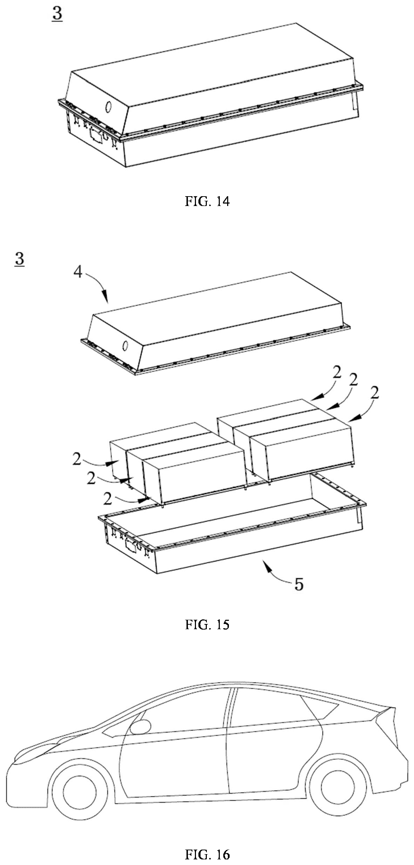

The battery according to the first aspect of this application may include a battery cell 1 (with reference to FIG. 7) and a cooling member 6, or may include a battery module 2 including a battery cell 1 (with reference to FIG. 13), and a cooling member 6, or may include a battery pack 3 including a battery cell 1 (with reference to FIG. 14), and a cooling member 6.

In some embodiments, one or more battery cells are included in the battery module, and a specific number can be adjusted according to the application and capacity of the battery module. FIG. 13 is a battery module 2 as an example. Referring to FIG. 13, in the battery module 2, a plurality of battery cells 1 may be sequentially arranged along a length direction of the battery module 2, and the first direction may be one of the length direction, a width direction, and a height direction of the battery module 2. Certainly, the battery cells 1 may alternatively be arranged in any other manner. Further, the plurality of battery cells 1 may be fixed by fasteners. Optionally, the battery module 2 may further include a casing having an accommodating space, and the plurality of battery cells 1 are accommodated in the accommodating space. It can be understood that the cooling member 6 is also accommodated in the accommodating space.

In some embodiments, the above battery module may further be assembled into a battery pack, and the number of battery modules included in the battery pack may be adjusted according to the application and capacity of the battery pack. Referring to FIG. 14 or FIG. 15 (FIG. 14 and FIG. 15 show a battery pack 3 as an example), the battery pack 3 may include a battery box and a plurality of battery modules 2 disposed in the battery box. The battery box may include an upper box body 4 and a lower box body 5, and the upper box body 4 can cover the lower box body 5 to form a closed space for accommodating the battery modules 2. The plurality of battery modules 2 may be arranged in the battery box in any manner.

In addition, this application further provides an electric apparatus, including: the battery according to the first aspect of this application. The battery can not only serve as a power source of the electric apparatus but also serve as an energy storage unit of the electric apparatus. The electric apparatus may include but is not limited to mobile devices (such as mobile phones and laptops), electric vehicles (such as battery electric vehicles, hybrid electric vehicles, plug-in hybrid electric vehicles, electric bicycles, electric scooters, electric golf carts, and electric trucks), electric trains, ships, satellites, and energy storage systems. With reference to FIG. 15, in a specific example, the electric apparatus may be a vehicle. A specific type of a battery for the electric apparatus may be selected according to the use requirements of the electric apparatus, for example, a battery having a battery cell, a battery module, or a battery pack may be selected.

In an example, the electric apparatus may be a battery electric vehicle, a hybrid electric vehicle, or a plug-in hybrid electric vehicle. To meet the requirements of the electric apparatus for high power and high energy density of the battery, a battery having a battery pack or a battery module may be used.

In another example, the electric apparatus may be a mobile phone, a tablet, a laptop, or the like. The electric apparatus is generally required to be light and thin, and a battery cell cooperating with a cooling member can be used as a power source.

The following describes examples of this application. The examples described below are exemplary and are only used to explain this application, and cannot be understood as limiting this application. For specific techniques or conditions that are not indicated in the examples, reference is made to techniques or conditions described in the literature in the art or according to the product specification. Reagents or instruments used without indicating the manufacturer are all conventional products that are commercially available.

### Example 1

### (I) Preparation of lithium secondary battery

### (1) Preparation of positive electrode sheet

A positive electrode active material LiNi_{0.6}Co_{0.1}Mn_{0.3}O₂, superconducting carbon black (Super P), and polyvinylidene fluoride (PVDF) were mixed at a weight ratio of 96:2:2, added with N-methylpyrrolidone (NMP), and fully stirred and mixed uniformly to obtain a positive electrode slurry; then the positive electrode slurry was applied on two surfaces of a positive electrode current collector aluminum foil with a thickness of 13 µm, where a coating surface density of the positive electrode slurry on each side of the aluminum foil was 20 mg/cm²; and then drying and cold pressing were performed to obtain a positive electrode sheet.

### (2) Preparation of negative electrode sheet

A negative electrode active material artificial graphite, Super P, styrene-butadiene rubber, and a thickener sodium carboxymethyl cellulose were mixed at a weight ratio of 96:0.5:2:1.5, added with deionized water, and fully stirred and mixed uniformly to obtain a negative electrode slurry; then the negative electrode slurry was applied on two surfaces of a negative electrode current collector copper foil with a thickness of 6 µm, where a coating surface density of the negative electrode slurry on each side of the copper foil was 11 mg/cm²; and then drying and cold pressing were performed to obtain a negative electrode sheet.

### (3) Preparation of electrolyte

In an argon atmosphere glove box with a water content less than 10 ppm, solvents EC (ethylene carbonate), EMC (ethyl methyl carbonate), and DMC (dimethyl carbonate) were mixed at a volume ratio of 1:1:1, then a fully dried lithium salt LiPF₆ was dissolved in the above organic solvent mixture, and the mixture was stirred uniformly to obtain an electrolyte, where a concentration of the lithium salt was 1 mol/L.

### (4) Preparation of separator

A polyethylene porous film with a thickness of 7 µm was used as the separator.

### (5) Preparation of buffer member

Polypropylene with a thickness of 3 mm and a porosity of 94% in a free state was used as the buffer member.

### (6) Preparation of lithium secondary battery cell

The positive electrode sheet, separator, and negative electrode sheet were stacked in order, with the separator positioned between the positive and negative electrode sheets for isolation, and then wound and formed to obtain an electrode assembly. Two electrode assemblies and one buffer member were stacked along a thickness direction of the electrode assemblies and then placed in a battery housing, with the buffer member sandwiched between the two electrode assemblies, where the thickness directions of the electrode assemblies and the buffer member in the electrode cell were consistent with a direction y; the prepared electrolyte was injected into the housing; and the housing was encapsulated to obtain a lithium secondary battery as shown in FIG. 7.

With reference to FIG. 7 and FIG. 10, with direction y serving as the first direction and direction x serving as the second direction, 16 lithium secondary battery cells were stacked in a manner shown in FIG. 9, a cooling member was sandwiched between two layers of battery cells stacked along the direction y, and the cooling member was fitted with the surface of each battery cell and covered the entire larger surface (that was, 11a) of the cooling member. The cooling member had a cooling medium inlet and outlet, and an inner cavity of the cooling member was filled with a cooling medium.

### Examples 2 to 13 and Comparative Examples 1 to 3

Differences between Examples 2 to 13 and Comparative Examples 1 to 3 are specifically shown in Table 1. As compared with Example 1, in the remaining examples and comparative examples, the first group margin of the battery cell was changed by changing the thickness of the buffer member. With reference to FIG. 7, in the remaining examples and comparative examples, a percentage of a contact area between a single surface of the battery cell and the cooling member in the first direction with respective to an area of the single surface was changed by changing a distance of the cooling member in the direction z.

### (II) Battery temperature rise test method

With the direction z of the lithium secondary battery cell serving as a height direction, a top cover of the battery cell faced upward. With reference to FIG. 9, a temperature sensing line was provided at a center position of the top cover of one of two battery cells located on a side of the outlet of the cooling member to test the temperatures of the battery cells, an inlet temperature of the cooling medium was controlled to be 25°C, and a flow rate of the cooling medium was 10 L/min. At 25°C, after the battery was cell discharged at 0.33C to 2.5 V, the battery temperature was made to be consistent with the ambient temperature, and the battery cell was charged according to the following process: the battery cell was charged at 3C for 5 min, charged at 2C for 10 min, charged at 1C for 15 min, and charged at 0.33C to an upper limit voltage; the highest temperature in this process was recorded, where temperature rise of lithium secondary battery cell = highest temperature - temperature before charging.

Relevant tests were performed on Examples 1 to 13 and Comparative Examples 1 to 3, and the test results are specifically shown in Table 1.

**Table 1 Differences between Examples 1 to 13 and Comparative Examples 1 to 3 and test results**

| | Arrangement of buffer member | Cooling plate | | First group margin | | | Second group margin | In first direction, percentage of contact area between single surface of battery cell and cooling plate to area of single surface | In first direction, percentage of contact area between single surface of battery cell and cooling plate to total outer surface area of single battery cell | Battery temperature rise (°C) |
|---|---|---|---|---|---|---|---|---|---|---|
| | | Number | Position | Group margin distribution | Battery cell at inlet of cooling medium flow channel | Battery cell at outlet of cooling medium flow channel | | | | |
| Example 1 | Sandwiched between two electrode assemblies | 1 | Sandwiched between two battery cells stacked along the first direction | First group margins of a plurality of battery cells are the same | 95% | 95% | 90% | 90% | 27% | 25.6 |
| Comparative Example 1 | Sandwiched between two electrode assemblies | 0 | / | First group margins of a plurality of battery cells are the same | 95% | 95% | 90% | 90% | / | 35.5 |
| Comparative Example 2 | / | 1 | Sandwiched between two battery cells stacked along the first direction | First group margins of a plurality of battery cells are the same | 90% | 90% | 90% | 90% | 27% | 37.4 |
| Comparative Example 3 | / | 0 | / | First group margins of a plurality of battery cells are the same | 90% | 90% | 90% | 90% | / | 40.2 |
| Example 2 | Sandwiched between the electrode assembly and the housing, and located on a side of the battery cell away from the cooling plate | 1 | Sandwiched between two battery cells stacked along the first direction | First group margins of a plurality of battery cells are the same | 95% | 95% | 90% | 90% | 27% | 29.8 |
| Example 3 | Sandwiched between two | 1 | Sandwiched between two battery cells | First group margins of a plurality of | 100% | 100% | 95% | 90% | 27% | 20.4 |
| | electrode assemblies | | stacked along the first direction | battery cells are the same | | | | | | |
| Example 4 | Sandwiched between two electrode assemblies | 1 | Sandwiched between two battery cells stacked along the first direction | First group margins of a plurality of battery cells are the same | 105% | 105% | 98% | 90% | 27% | 18.9 |
| Example 5 | Sandwiched between two electrode assemblies | 1 | Sandwiched between two battery cells stacked along the first direction | First group margins of a plurality of battery cells are the same | 108% | 108% | 100% | 90% | 27% | 18.1 |
| Example 6 | Sandwiched between two | 1 | Sandwiched between two battery cells | First group margins of a plurality of | 100% | 100% | 95% | 80% | 24% | 23.4 |
| | electrode assemblies | | stacked along the first direction | battery cells are the same | | | | | | |
| Example 7 | Sandwiched between two electrode assemblies | 1 | Sandwiched between two battery cells stacked along the first direction | First group margins of a plurality of battery cells are the same | 100% | 100% | 95% | 85% | 25.50% | 21.6 |
| Example 8 | Sandwiched between two electrode assemblies | 1 | Sandwiched between two battery cells stacked along the first direction | First group margins of a plurality of battery cells are the same | 100% | 100% | 95% | 100% | 30% | 18.5 |
| Example 9 | Sandwiched between two | 1 | Sandwiched between two battery cells | Group margins of battery cells increase in an | 100% | 102% | 95% | 90% | 27% | 19.8 |
| | electrode assemblies | | stacked along the first direction | arithmetic sequence in a direction from the cooling medium inlet to the outlet | | | | | | |
| Example 10 | Sandwiched between two electrode assemblies | 1 | Sandwiched between two battery cells stacked along the first direction | First group margins of a plurality of battery cells are the same | 100% | 105% | 95% | 90% | 27% | 19.2 |
| Example 11 | Sandwiched between two electrode assemblies | 1 | Sandwiched between two battery cells stacked along the first direction | First group margins of a plurality of battery cells are the same | 99% | 102% | 94% | 90% | 27% | 20.7 |
| Example 12 | Sandwiched between two electrode assemblies | 2 | Distributed on two sides of two rows of battery cells opposite each other along the first direction | First group margins of a plurality of battery cells are the same | 100% | 100% | 95% | 90% | 27% | 15.8 |
| Example 13 | Sandwiched between two electrode assemblies | 3 | Alternately stacked with battery cells along the first direction | First group margins of a plurality of battery cells are the same | 100% | 100% | 95% | 90% | 27% | 13.4 |

### Results and Conclusions:

From Examples 1 to 13, Comparative Examples 1 to 3, and Table 1, it can be seen that as compared to batteries without cooling members and without buffer members, providing a buffer member in the battery cell, stacking the buffer member with the electrode assembly, and providing a cooling member on one side of the battery cell along a stacking direction can further achieve a good heat dissipation effect. Further, the heat dissipation effect of the battery can be further improved by one or more of the following methods: increasing the total relative heat exchange area between the surface of the battery cell and the cooling member, increasing the group margin of the cooling member within an appropriate range, making the first group margins of a plurality of battery cells distributed along the flow direction of the cooling medium (in a direction from the inlet toward the outlet) gradually increase within an appropriate range, or increasing the number of the cooling members and adjusting the arrangement positions of the cooling members.

In conclusion, it should be noted that: the above embodiments are only used to illustrate the technical solutions of this application and are not intended to limit this application. Although this application has been described in detail with reference to the foregoing embodiments, those of ordinary skill in the art should understand that: modifications can still be made to the technical solutions recorded in the foregoing embodiments, or equivalent replacements can be made to some or all of the technical features; and these modifications or replacements do not make the essence of the corresponding technical solutions depart from the scope of the technical solutions of the embodiments of this application, and they should all be covered within the scope of the claims and specification of this application. In particular, as long as there is no structural conflict, all the technical features mentioned in the embodiments can be combined in any manner. This application is not limited to the specific embodiments disclosed herein but includes all technical solutions falling within the scope of the claims.

## Claims

1. A battery, comprising:
a battery cell, comprising: a housing, at least one electrode assembly, and at least one buffer member, wherein the electrode assembly and the buffer member are disposed in the housing, the buffer member is provided on at least part of a surface of the electrode assembly and/or inside the electrode assembly, and at least one electrode assembly and at least one buffer member are stacked along a first direction; and
at least one cooling member provided on at least one side of the battery cell along the first direction.

2. The battery according to claim 1, comprising: at least one first battery cell group, wherein the first battery cell group comprises a plurality of battery cells stacked along the first direction.

3. The battery according to claim 2, wherein a plurality of first battery cell groups are stacked along a second direction, and the second direction intersects the first direction.

4. The battery according to claim 2 or 3, wherein in the first direction, the cooling member is provided between two adjacent battery cells, and/or the cooling member is provided on one side of the plurality of battery cells along the first direction.

5. The battery according to claim 1, comprising: at least one second battery cell group, wherein the second battery cell group comprises a plurality of battery cells stacked along a second direction, and the second direction intersects the first direction.

6. The battery according to claim 5, wherein in the first direction, the cooling member is provided between two adjacent battery cells, and/or the cooling member is provided on one side of the plurality of battery cells along the first direction.

7. The battery according to any one of claims 1 to 6, wherein the battery cell comprises two first surfaces oppositely disposed along the first direction, and an area of the first surface is greater than or equal to an area of any single surface among other surfaces of the battery cell.

8. The battery according to claim 7, wherein an area of an orthographic projection of the buffer member stacked with the electrode assembly along the first direction on the first surface is greater than or equal to 80% of the area of the first surface.

9. The battery according to any one of claims 2 to 8, wherein in the first direction, the cooling member is provided between every two of the plurality of battery cells.

10. The battery according to any one of claims 1 to 9, wherein a first group margin of the battery cell is greater than or equal to 95%, optionally greater than or equal to 100%; and a second group margin of the battery cell is greater than or equal to 90%, optionally greater than or equal to 95%;
wherein the first group margin refers to: in the first direction, a ratio of a sum of a total thickness of the buffer member in the battery cell in a free state and a maximum total dimension of the electrode assembly in a fully charged state to a distance between inner wall surfaces of the housing; and
the second group margin refers to: in the first direction, a ratio of the maximum total dimension of the electrode assembly in the battery cell in a fully charged state to the distance between inner wall surfaces of the housing.

11. The battery according to claim 10, wherein the first group margin of the battery cell is less than or equal to 108%, optionally less than or equal to 105%; and/or the second group margin is less than or equal to 100%, optionally less than or equal to 98%.

12. The battery according to any one of claims 1 to 11, wherein a cooling medium flow channel is provided inside the cooling member, the cooling medium flow channel comprises an inlet and an outlet, and the first group margin of the battery cell located on a side of the outlet is greater than or equal to the first group margin of the battery cell located on a side of the inlet.

13. The battery according to claim 12, wherein at least one of the following conditions is satisfied:
a difference between the first group margin of the battery cell located on a side of the outlet and the first group margin of the battery cell located on a side of the inlet is less than or equal to 5%;
a difference between the second group margin of the battery cell located on a side of the outlet and the second group margin of the battery cell located on a side of the inlet is less than or equal to 1%, optionally 0; and
the first group margins of the plurality of battery cells distributed along a direction from the inlet toward the outlet gradually increase, and a difference between the first group margin and the second group margin of the battery cell located on a side of the outlet is greater than a difference between the first group margin and the second group margin of the battery cell located on a side of the inlet.

14. The battery according to claim 12 or 13, comprising: the plurality of cooling members, wherein cooling medium flow channels of the plurality of cooling members are arranged in parallel and/or in series; and/or
the plurality of cooling members are connected through a connecting member, and the cooling medium flow channels of two adjacent cooling members spaced apart in the first direction are capable of being arranged in a communicating manner through the connecting member.

15. The battery according to any one of claims 1 to 14, wherein the battery cell comprises two second surfaces oppositely disposed along the first direction, at least one of the two second surfaces is in contact with the cooling member, and a contact area between the second surface and the cooling member is greater than or equal to 80% of an area of the second surface, optionally 80% to 100% of the area of the second surface, and further optionally 90% to 100% of the area of the second surface.

16. The battery according to any one of claims 1 to 15, wherein a total contact area between a single battery cell and the cooling member is greater than or equal to 20% of a total surface area of the battery cell, optionally greater than or equal to 25% of the total surface area of the battery cell.

17. The battery according to any one of claims 1 to 16, wherein in the battery cell, the buffer member is provided between part of the surface of the electrode assembly and the housing.

18. The battery according to claim 17, wherein a thermal conductivity of the buffer member provided between the electrode assembly and the housing is greater than or equal to 3 W/(m·°C), optionally greater than or equal to 5 W/(m·°C).

19. The battery according to any one of claims 1 to 18, wherein in the battery cell, the buffer member is provided between two adjacent electrode assemblies.

20. The battery according to claim 19, wherein a thermal conductivity of the buffer member provided between two adjacent electrode assemblies is less than or equal to 0.05 W/(m·°C), optionally less than or equal to 0.03 W/(m·°C).

21. The battery according to any one of claims 1 to 20, wherein the electrode assembly comprises a separator, and a thermal conductivity of the separator is greater than or equal to a thermal conductivity of the buffer member; and/or
the battery cell further comprises: an insulating film, wherein the insulating film wraps at least part of the surface of the electrode assembly, and in the first direction, each electrode assembly is stacked with at least one insulating film layer, and a thermal conductivity of the insulating film is greater than or equal to the thermal conductivity of the buffer member.

22. The battery according to claim 21, wherein a third group margin of the battery cell is greater than or equal to 95%, optionally greater than or equal to 100%, wherein the third group margin refers to: in the first direction, a ratio of a sum of a total thickness of the buffer member in the battery cell in a free state, a maximum total dimension of the electrode assembly in a fully charged state, and a total thickness of the insulating film to a distance between inner wall surfaces of the housing.

23. The battery according to any one of claims 1 to 22, wherein the battery cell comprises at least two electrode assemblies, and each buffer member in the battery cell is independently provided between two adjacent electrode assemblies and stacked with the electrode assemblies along the first direction.

24. The battery according to any one of claims 1 to 23, wherein the battery cell comprises two third surfaces oppositely disposed along the first direction, and an orthographic projection of the buffer member stacked with and disposed adjacent to the electrode assembly along the first direction on the third surface is located within a region of an orthographic projection of the electrode assembly on the third surface.

25. The battery according to claim 24, wherein an area of the orthographic projection of the buffer member stacked with and disposed adjacent to the electrode assembly along the first direction on the third surface is greater than or equal to 80% of an area of the orthographic projection of the electrode assembly on the third surface.

26. An electric apparatus, comprising the battery according to any one of claims 1 to 25.
